# EUROPEAN PATENT APPLICATION

(11) **EP 4 213 596 A1**
(43) Date of publication of application: **19.07.2023**
(21) Application number: 23151654.3
(22) Date of filing: 16.01.2023
(51) Int. Cl.: H05B 47/19, H04L 12/28

(54) **METHOD FOR COMMISSIONING ELECTRIC OR ELECTRONIC DEVICES IN A HOME AUTOMATION SYSTEM**

(30) Priority: 14.01.2022 BE 202205022
(71) Applicant: Niko NV, 9100 Sint-Niklaas (BE)
(72) Inventor: TROCH, Kenneth, 9240 Zele (BE); MAES, Pauline, 2060 Antwerpen (BE)
(74) Representative: Winger

(57) **Abstract**

The present invention provides a method for commissioning electric or electronic devices in a home automation system. The method comprises providing a location of at least one electric or electronic device, identifying the a least one electric or electronic device, and commissioning the at least one identified electric or electronic device. Identifying the at least one electric or electronic device is done by sending a feature list of the electric or electronic device to be commissioned to the cloud via a mobile device such as e.g. a smart phone, a tablet or the like, receiving, on the mobile device, device characteristics relating to the at least one electric or electronic device from the cloud, validating the received device characteristics, and adding the identified electric or electronic device to a list of identified electric or electronic devices. Commissioning the at least one identified electric or electronic device is done by selecting a sensor and an actor in the at least one electric or electronic device and link the selected sensor and the selected actor to each other.

## Description

### Technical field of the invention

The present invention relates to a method for commissioning devices in a home automation system. More particularly, the present invention relates to a method for commissioning electric or electronic devices in a home automation by using extended reality technology.

### Background of the invention

Home automation systems are more and more integrated in new or even in existing homes. Commissioning of such home automation systems, or in other words, connecting electric or electronic devices, such as wall switches, light installations on walls or ceilings, control devices, heating and/or cooling devices, ... to each other and assign functionality to these electric or electronic devices, can be complicated. Typically, such commissioning may be done manually and can be time consuming.

Therefore, more and more automatic methods are used for commissioning a home automation system.

EP 3 104 239 describes a method and a device for mobile on-site building engineering. The method uses at least a camera of a mobile device to identify and to locate one or more electric or electronic devices, in a room of a building. Identification information about the electric or electronic devices is obtained; functional relationships are established between one of the electric or electronic devices and another one of the electric or electronic devices and/or functions are assigned to one or more identified automation devices.

Identification information about the electric or electronic device may be obtained in different ways. For example, by manually selecting the location description from an existing building plan, and/or by manually selecting a provided device identification code from an existing inventory list, and/or by manually specifying the location in the building inventory or building plan, and/or by automatically performing an image recognition of the image obtained by the camera and by manually querying in a database depending on a recognized automation device to assign identification information, and/or by associating an interpreted voice information of the user to the automation device identified by the camera; and/or by prompting a user to select from the preconfigured application menu the automation device class and to specify the device type; and/or by selecting from locations of all automation devices shown in a building floor plan, wherein to automation devices shown in a building floor plan identification information is assigned; and/or by receiving from the automation device to be identified, particularly by means of a QR tag, via NFC, Bluetooth, or WLAN/4G.

However, to obtain the information about the electric or electronic device, manual actions are required and/or identification information needs to be present on the electric or electronic device itself. Moreover, QR tags or other information provided on a product are usually not visible anymore or difficult to reach after installation of the electric or electronic device. If, on the other hand, QR tags or other information are placed on the product to be visible after installation,

### Summary of the invention

It is an object of embodiments of the present invention to provide a method for commissioning at least one electric or electronic device in a home automation system using extended reality technology.

The above objective is accomplished by a method according to embodiments of the present invention.

The present invention provides a method for commissioning electric or electronic devices in a home automation system. The method comprises providing a location of at least one electric or electronic device, identifying the a least one electric or electronic device, and commissioning the at least one identified electric or electronic device. Identifying the at least one electric or electronic device is done by sending a feature list of the electric or electronic device to be commissioned to the cloud via a mobile device such as e.g. a smart phone, a tablet or the like, receiving on the mobile device device characteristics relating to the at least one electric or electronic device from the cloud, validating the received device characteristics, and adding the identified electric or electronic device to a list of identified electric or electronic devices. Commissioning the at least one identified electric or electronic device is done by selecting a sensor and an actor in the at least one electric or electronic device and link the selected sensor and the selected actor to each other. With "commissioning" is meant the process of exchanging credentials within a network, so that the at least one sensor can start communicating with the home automation system. In other words, with commissioning is meant making the at least one electric or electronic device ready to be used in the home automation system.

With feature list of the at least one electric or electronic device is meant a list of typical features of the at least one electric or electronic device. Examples of features of the at least one electric or electronic device may be but are not limited to color, shape, size, number of devices next to each other, built into a wall or ceiling, provided in a cabinet (such as e.g. a d DINrail module) or the like.

Device features are sent to the cloud. In the cloud a product database is stored linking the device features to the products. By means of the feature list, the at least one electric or electronic device is identified and the device characteristics are sent from the cloud to the mobile device. These device characteristics are thus the identification of the type of product, for example, switch, lighting device, outlet socket, dimmer, roller blinds, or the like.

A method according to embodiments of the invention is used to commission electric or electronic devices by using extended reality technology. The device recognition is based on features (color, shape,..) and not only on specific product identification numbers and/or QR codes or tags provided on the product itself.

According to embodiments of the invention, the sensor and the actor may be located in a same electric or electronic device. This may, for example be the case for a sensor.

According to other embodiments, the sensor may be located in a first electric or electronic device and the actor may be located in a second electric or electronic device. For example a control such as e.g. a switch can be linked to a lighting device or to roller blinds according to a method according to embodiments of the invention. In that case, the sensor is located in the switch and the actor is located in the lighting device or in the roller blinds. Identifying the switch and the lighting device or roller blinds can be both be done by sending a feature list to the cloud, or in other words can both be done by using extended reality or augmented reality. According to embodiments of the invention, only one of the devices can be identified by sending a feature list to the cloud and the other can be manually identified by a user.

According to embodiments of the invention, sending a feature list of the electric or electronic device to be commissioned to the cloud may comprise taking a picture or real time scan of the at least one electric or electronic device with the mobile device in order to determine the feature list of the electric or electronic device to be sent to the cloud.

The method may, according to embodiments of the invention, furthermore comprise, before identifying the at least one electric or electronic device:
- pressing a switch intended for controlling the at least one electric or electronic device (such as e.g. a lighting device, roller blinds, an HVAC device or the like), and
- activating a corresponding relay in a cabinet (e.g. when the electric or electronic device is a lighting device the relay may be activated in a predefined pattern).

After the electric or electronic device is identified, the switch can be linked to the electric or electronic device for controlling the electric or electronic device.

In the example given, the switch comprises the sensor and the at least one electric or electronic device comprises the actor. The sensor of the switch and the actor of the at least one electric or electronic device are linked to each other so that the at least one electric or electronic device can be controlled by means of the switch.

The method may furthermore comprise sending the linked configuration between sensor and actor to the cloud or to a gateway.

An advantage of sending the linked configuration to the gateway is that no internet connection is therefore required.

According to still further embodiments of the invention, the method may furthermore comprise assigning a function to the at least one electric or electronic device.

Typical functions that can be assigned to the at least one electric or electronic device are, for example but not limited to, on/off, making it dimmable, timer for switching off the electric or electronic device or the like.

Providing a location of the at least one electronic device may be done manually via the mobile device, or may be done via location recognition or via coupling to a floorplan.

According to embodiments of the invention, the mobile device may, for example, be one of a smartphone, a tablet or a smart glass.

The electric or electronic device may, for example but not limited to, be a lighting device, roller blinds, a switch, a socket outlet, a sensor, a dimmer or the like.

The present invention may also provide a method for commissioning a lighting device. The method may comprise:
- providing a location of the lighting device,
- identifying the lighting device by:
   - pressing a switch for identifying the switch as control for the lighting device,
   - switching on and off a relay module in a cabinet according to a predefined pattern, the relay module being connected to the lighting device, this causing the related lighting device to flicker according to the predefined pattern,
   - making a picture of a real time scan of the flickering lighting device for defining a feature list of the lighting device, and
   - sending the feature list to the cloud,
- receiving on the mobile device, device characteristics, relating to the lighting device from the cloud,
- validating the received device characteristics,
- selecting a sensor in the switch,
- selecting an actor in the lighting device, and
- linking the selected sensor and the selected actor to each other.

### Brief description of the drawings

It has to be noted that same reference signs in the different figures refer to same, similar or analogous elements.

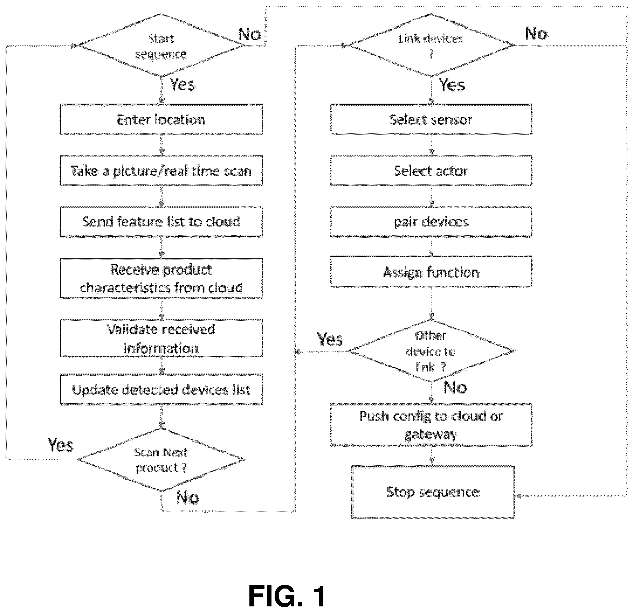

Fig. 1 schematically illustrates a method according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides a method for commissioning electric or electronic devices in a home automation system. The method comprises providing a location of at least one electric or electronic device, identifying the a least one electric or electronic device, and commissioning the at least one identified electric or electronic device. Identifying the at least one electric or electronic device is done by sending a feature list of the electric or electronic device to be commissioned to the cloud via a mobile device such as e.g. a smart phone, a tablet or the like, receiving on the mobile device device characteristics relating to the at least one electric or electronic device from the cloud, validating the received device characteristics, and adding the identified electric or electronic device to a list of identified electric or electronic devices. Commissioning the at least one identified electric or electronic device is done by selecting a sensor and an actor in the at least one electric or electronic device and link the selected sensor and the selected actor to each other. With "commissioning" is meant the process of exchanging credentials within a network, so that the at least one sensor can start communicating with the home automation system. In other words, with commissioning is meant making the at least one electric or electronic device ready to be used in the home automation system.

With feature list of the at least one electric or electronic device is meant a list of typical features of the at least one electric or electronic device. Examples of features of the at least one electric or electronic device may be but are not limited to color, shape, number of devices next to each other, built into a wall or ceiling, provided in a cabinet (such as e.g. a d DINrail module) or the like.

Device features are sent to the cloud. In the cloud a product database is stored linking the device features to the products. By means of the feature list, the at least one electric or electronic device is identified and the device characteristics are sent from the cloud to the mobile device. These device characteristics are thus the identification of the type of product, for example, switch, lighting device, outlet socket, dimmer, roller blinds, or the like.

A method according to embodiments of the invention is used to commission electric or electronic devices by using extended reality technology. The device recognition is based on features (color, shape,..) and not only on specific product identification numbers and/or QR codes or tags provided on the product itself. Hence, a user does not have to take into account the fact that the product identification code and/or QR codes might not be visible anymore after they have been installed, for example, into a wall or ceiling. The method can thus be performed at al times on installed products.

The present invention will hereinafter be described by means of different embodiments. It has to be understood that these embodiments are only for the ease of understanding the invention and are not intended to limit the invention in any way.

Fig. 1 schematically illustrates a method according to embodiments of the invention. Such method provides a way for commissioning electric or electronic devices in a home automation system so as to make them work. According to embodiments of the invention, the electric or electronic device may, for example but not limited to, be a lighting device, roller blinds, a switch, a socket outlet, a sensor, a dimmer or the like.

In a first step, a location of the at least one electric or electronic device is provided. This may be done on a mobile device such as for example but not limited to a smart phone, a tablet or a smart glass. Providing a location of the at least one electronic device may be done manually via the mobile device, via location recognition or via coupling to a floorplan of the house. In a next step, the at least one electric or electronic device is identified. This is done by, with a mobile device, take a picture or make a real-time scan of the first electric or electronic device. On the basis of the picture or real-time scan a feature list is determined of the electric or electronic device. The feature list comprises specific features of the electric or electronic device, such as for example, color, shape, size, number of devices next to each other, built into a wall or ceiling, provided in a cabinet (such as e.g. a d DINrail module) or the like. Feature are characteristics that feed a neural network to make a decision. The features are defined in advance for each of the products that has to be recognized by sending the feature list to the cloud. By pointing out to the electric or electronic device and taking a picture or real-time scan, the neural netwok will be able to identify the device stored in the database in the cloud and will send the device characteristics back from the cloud to the mobile device.

Thus, the feature list is then sent to the cloud for identification of the electric or electronic device. In the cloud, the feature list is compared to a stored device/feature list. When a match is found, the user receives the characteristics of the electric or electronic device. These device characteristics are thus the identification of the type of product, for example, switch, lighting device, socket outlet, sensor, dimmer, roller blinds, or the like.

When the device characteristics are received by the user on the mobile device, this information needs to validated by the user by. According to embodiments, it may be possible that instead of only one identified device, there is provided a list of more than one identified electric or electronic device and a user will have to indicate which of the proposed electric or electronic devices is the right one. In the best possible case, only one possibility of the identified electric or electronic device is proposed and a user only has to confirm.

After validation or confirmation by the user, the identified electric or electronic device may be added to a list of identified electric or electronic devices on the mobile device.

According to embodiments of the invention, in a next step, a function can be assigned to the electric or electronic device. Typical functions that can be assigned to the at least one electric or electronic device are, for example but not limited to, on/off, making it dimmable, timer for switching off the electric or electronic device or the like.

According to embodiments of the invention, the identified electric or electronic device may comprise a sensor and an actor. This may, for example, be the case for a sensor. According to these embodiments, the sensor and actor are selected in the electric or electronic device and are linked to each other in order to commission the electric or electronic device, or in other words to make the electric or electronic device work and make it part of the home automation system.

According to other embodiments, a first electric or electronic device may comprise a sensor and a second electric or electronic device may comprise an actor. This may be, for example but not limited to, the case for the combination of a switch and a lighting device or a push button and roller blinds. According to these embodiments, the method as described above may be repeated for at least a second electric or electronic device.

When the electric or electronic devices to be commissioned are identified, linking between at least two devices can start. Therefore, an actor is selected in the first electric or electronic device and a sensor is selected in the second electric or electronic device. Then, the first and second electric or electronic devices are linked to each other by linking the sensor and the actor to each other.

One electric or electronic device can be linked to more than one other electric or electronic device. For example, a switch can be linked to one or more lighting devices, or a push button can be linked to one or more roller blinds.

According to embodiments of the invention, when two electric or electronic devices have to be configured by linking them together, this may also be done by only commissioning one of the devices according to embodiments of the invention and commissioning the other electric or electronic device in another way.

For example, according to embodiments of the invention, a first electric or electronic device may be a switch and a second electric or electronic device may be a lighting device. The devices can be configures as follows.

In a first step, a location of the lighting device may be provided. This may be done on a mobile device such as for example but not limited to a smart phone, a tablet or a smart glass. Providing a location of the at least one electronic device may be done manually via the mobile device, via location recognition or via coupling to a floorplan of the house. In a next step, the lighting device may be identified as follows. First, the switch may be pressed or activated for identifying the switch as control for the lighting device. Then, a relay module in a cabinet may be switched on and off according to a predefined pattern. The relay module is connected to the lighting device that is to be commissioned. Switching on and off the relay module according to a predetermined pattern, e.g. morse code, may cause the related lighting device to flicker according to that predefined pattern. In a next step, a picture or a real time scan may be made of the flickering lighting device for defining a feature list of that lighting device, and this feature list may be sent to the cloud. In the database stored in the cloud, a match is sought for the feature list that was sent, and when a match is found, device characteristics are sent from the cloud to the mobile device. A user can then validate the received device characteristics. According to embodiments, it may be possible that instead of only one identified device, there is provided a list of more than one identified electric or electronic device and a user will have to indicate which of the proposed electric or electronic devices is the right one. In the best possible case, only one possibility of the identified electric or electronic device is proposed and a user only has to confirm.

In a next step, a sensor may be selected in the switch and an actor may be selected in the lighting device. For commissioning the lighting device such that it can be controlled by the switch, the selected sensor and the selected actor may be linked to each other.

The step of linking electric or electronic devices as described according to the different embodiments above may be repeated as many times as there are electric or electronic devices to be linked to each other. Linking the electric or electronic devices to each other may also be referred to as configuration.

The linked configuration may, according to embodiments of the invention, be sent to the cloud or to a local gateway. In other words, the set configuration may be stored in the cloud and/or in a local gateway. An advantage of storing the configuration in a local gateway is that no internet connection is required in that case.

When the configuration is stored in the cloud or in a local gateway, the home automation system is ready to be used. At any time, additional electric or electronic devices can be configured or commissioned in a same way as described above. A user just has to put the home automation system in configuration mode, and any number of additional electric or electronic device can be added and linked to already configured electric or electronic devices or to newly added electric or electronic devices. Similar, already configured electric or electronic devices can also be linked to newly added electric or electronic devices.

The process of commissioning may be repeated as many times as there are electric or electronic devices to be identified and to be commissioned in the home automation system. In other words, the steps of providing a location, identifying and adding the electric or electronic device to the list with identified electric or electronic devices may be repeated for each of the electric or electronic devices present in the home automation system. It has to be noted that the methods according to the different embodiments can be combined or that only one method according to one embodiment of the invention may be used to configure all electric and electronic devices in a home automation system.

## Claims

1. A method for commissioning electric or electronic devices in a home automation system, the method comprising:
- providing a location of at least one electric or electronic device,
- identifying the a least one electric or electronic device, and
- commissioning the at least one identified electric or electronic device,
wherein identifying the at least one electric or electronic device is done by:
sending a feature list of the electric or electronic device to be commissioned to the cloud via a mobile device,
- receiving, on the mobile device, device characteristics relating to the at least one electric or electronic device from the cloud,
- validating the received device characteristics, and
- adding the identified electric or electronic device to a list of identified electric or electronic devices,
and wherein commissioning the at least one identified electric or electronic device is done by selecting a sensor and an actor in the at least one electric or electronic device and link the selected sensor and the selected actor to each other.

2. A method according to claim 1, wherein the sensor and the actor are located in a same electric or electronic device.

3. A method according to claim 1, wherein the sensor is located in a first electric or electronic device and the actor is located in a second electric or electronic device.

4. A method according to any of claims 1 to 3, wherein sending a feature list of the electric or electronic device to be commissioned to the cloud comprises:
- taking a picture or real time scan of the at least one electric or electronic device with the mobile device for determining the feature list of the electric or electronic device to be sent to the cloud.

5. A method according to any of the previous claims, furthermore comprising, before identifying the at least one electric or electronic device,
- pressing a switch intended for controlling the at least one electric or electronic device (such as e.g. a lighting device, roller blinds, an HVAC device or the like), and
- activating a corresponding relay in a cabinet (e.g. when the electric or electronic device is a lighting device the relay may be activated in a predefined pattern).

6. A method according to any of the previous claims, further comprising:
- sending the linked configuration between sensor and actor to the cloud or to a local gateway.

7. A method according to any of the previous claims, further comprising:
- assigning a function to the at least one electric or electronic device.

8. A method according to any of the previous claims, wherein providing a location of the at least one electronic device is done manually via the mobile device, via location recognition or via coupling to a floorplan of the house.

9. A method according to any of the previous claims, wherein the mobile device is one of a smartphone, a tablet or a smart glass.

10. A method according to any of the previous claims, wherein the electric or electronic device is a lighting device, roller blinds, a switch, a socket outlet, a sensor, a dimmer or the like.
